# EUROPEAN PATENT APPLICATION

(11) **EP 4 845 274 A1**
(43) Date of publication of application: **25.11.2026**
(21) Application number: 24918736.0
(22) Date of filing: 19.01.2024
(51) Int. Cl.: H04W 72/0457, H04W 48/10, H04W 56/00

(54) **TERMINAL, BASE STATION, AND COMMUNICATION METHOD**

(71) Applicant: NTT DOCOMO, INC., Tokyo 100-6150 (JP)
(72) Inventor: OKANO, Mayuko, Tokyo 100-6150 (JP); YOSHIOKA, Shohei, Tokyo 100-6150 (JP); MIN, Tianyang, Tokyo 100-6150 (JP); SHIMODAIRA, Hidekazu, Tokyo 100-6150 (JP); NAGATA, Satoshi, Tokyo 100-6150 (JP)
(74) Representative: Hoffmann Eitle
(86) International application number: PCT/JP2024/001478
(87) International publication number: WO 2025/154269

(57) **Abstract**

A terminal includes: a control unit configured to determine a specific component carrier from among a plurality of component carriers in a frequency band in which resources of the plurality of component carriers are bundled; and a reception unit configured to receive a signal using the specific component carrier.

## Description

### Technical Field

The present invention relates to a terminal, a base station, and a communication method in a radio communication system.

### Background Art

In NR (New Radio) (also referred to as "5G"), which is a successor system to LTE (Long Term Evolution), technologies have been studied to satisfy, as requirement conditions, a large-capacity system, high data transmission speed, low latency, simultaneous connection of a large number of terminals, low cost, power saving, and the like (for example, Non-Patent Document 1).

Further, in NR, a carrier aggregation (CA: Carrier Aggregation) function that uses a wide bandwidth in order to secure data resources has been studied continuously from LTE. With the carrier aggregation function, wideband data resources can be secured by bundling multiple component carriers (CCs: Component Carriers).

### Citation List

### Non-Patent Literature

[Non-Patent Literature 1] 3GPP TS 38.300 V18.0.0 (2023-12)

### Summary of Invention

### Technical Problem

In a future system (for example, NR Release 18 and 6G as a successor system to NR), more flexible and efficient resource allocation may be required. However, in the conventional carrier aggregation function, it is necessary to schedule data resources for each of the bundled component carriers, which causes a problem that the overhead of resource allocation is large. To address this problem, a technique of bundling and using resources of multiple component carriers has been proposed.

However, in the technique of bundling and using resources of a plurality of component carriers, operations related to initial access are not clearly defined. Therefore, in the conventional technology, when resources of a plurality of component carriers are bundled and used, operations related to initial access may not be appropriately performed.

The present invention has been made in view of the above, and an object of the present invention is to provide a technique that enables operations related to initial access to be appropriately performed when resources of a plurality of component carriers are bundled and used. Solution to Problem

According to the technology disclosed herein, there is provided a terminal including:
a control unit configured to determine a specific component carrier from among a plurality of component carriers in a frequency band in which resources of the plurality of component carriers are bundled; and
a reception unit configured to receive a signal using the specific component carrier.

### Advantageous Effects of Invention

According to the technology disclosed herein, there is provided a technique that enables operations related to initial access to be appropriately performed when resources of a plurality of component carriers are bundled and used.

### Brief Description of Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a first diagram illustrating an example of a configuration of a virtual CC according to an embodiment of the present invention;
[Fig. 4] FIG. 4 is a second diagram illustrating an example of a configuration of a virtual CC according to an embodiment of the present invention;
[Fig. 5] FIG. 5 is a diagram for describing basic operations according to an embodiment of the present invention;
[Fig. 6] FIG. 6 is a diagram illustrating an example of use of a virtual CC and actual CCs in initial access;
[Fig. 7] FIG. 7 is a diagram illustrating an example of use of a virtual CC and actual CCs in initial access;
[Fig. 8] FIG. 8 is a diagram illustrating an example of use of a virtual CC and actual CCs in initial access;
[Fig. 9] FIG. 9 is a diagram illustrating an example of use of a virtual CC and actual CCs in initial access;
[Fig. 10] FIG. 10 is a diagram illustrating an example of use of a virtual CC and actual CCs in initial access;
[Fig. 11] FIG. 11 is a diagram illustrating an example of use of a virtual CC and actual CCs for synchronization signals;
[Fig. 12] FIG. 12 is a diagram illustrating an example of use of a virtual CC and actual CCs for synchronization signals;
[Fig. 13] FIG. 13 is a diagram illustrating an example functional configuration of a base station according to an embodiment of the present invention;
[Fig. 14] FIG. 14 is a diagram illustrating an example functional configuration of a terminal according to an embodiment of the present invention;
[Fig. 15] FIG. 15 is a diagram illustrating an example hardware configuration of a base station or a terminal according to an embodiment of the present invention; and
[Fig. 16] FIG. 16 is a diagram illustrating an example configuration of a vehicle according to an embodiment of the present invention.

### Description of Embodiments

Hereinafter, embodiments of the present invention will be described with reference to the drawings. It should be noted that the embodiments described below are merely examples, and embodiments to which the present invention is applied are not limited to the embodiments described below.

In operating the radio communication system according to the embodiments of the present invention, existing technologies are used as appropriate. However, such existing technologies are, for example, existing LTE or existing NR, and are not limited to existing LTE or NR.

Further, in the embodiments of the present invention described below, terms such as SS (Synchronization Signal), PSS (Primary SS), SSS (Secondary SS), PBCH (Physical Broadcast Channel), PRACH (Physical Random Access Channel), PDCCH (Physical Downlink Control Channel), PDSCH (Physical Downlink Shared Channel), PUCCH (Physical Uplink Control Channel), and PUSCH (Physical Uplink Shared Channel), which are used in existing LTE or NR, are used. This is for convenience of description, and signals, functions, and the like similar to these may be referred to by other names. Further, the above terms in NR correspond to NR-SS, NR-PSS, NR-SSS, NR-PBCH, NR-PRACH, and the like. However, even for signals used in NR, "NR-" is not necessarily explicitly indicated.

Further, in the embodiments of the present invention, the duplex scheme may be a TDD (Time Division Duplex) scheme, an FDD (Frequency Division Duplex) scheme, or another scheme (for example, Flexible Duplex).

Further, in the embodiments of the present invention, "being configured (Configure)" with respect to a radio parameter or the like may mean that a predetermined value is pre-configured, or may mean that a radio parameter notified from the base station 10 or the terminal 20 is configured.

Further, in the following description, unless it is clear from the context that another meaning is intended, "A/B" means "A or B". Further, "A or B" includes only A, only B, and "A and B".

### (System Configuration)

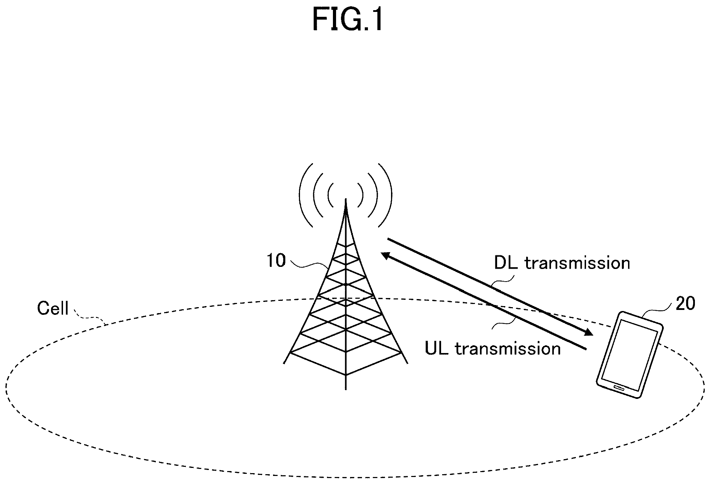

FIG. 1 is a diagram illustrating an example configuration (1) of a radio communication system according to an embodiment of the present invention. As illustrated in FIG. 1, the radio communication system according to the embodiments of the present invention includes a base station 10 and a terminal 20. Although one base station 10 and one terminal 20 are illustrated in FIG. 1, this is merely an example, and a plurality of each may be provided.

The base station 10 is a communication apparatus that provides one or more cells and performs radio communication with the terminal 20. Physical resources of a radio signal are defined in a time domain and a frequency domain; the time domain may be defined by the number of OFDM (Orthogonal Frequency Division Multiplexing) symbols, and the frequency domain may be defined by the number of subcarriers or the number of resource blocks. Further, the TTI (Transmission Time Interval) in the time domain may be a slot, or the TTI may be a subframe.

The base station 10 transmits a synchronization signal and system information to the terminal 20. The synchronization signal is, for example, NR-PSS and NR-SSS. The system information is transmitted, for example, on NR-PBCH, and is also referred to as broadcast information. The synchronization signal and the system information may be referred to as an SSB (SS/PBCH block). As illustrated in FIG. 1, the base station 10 transmits a control signal or data to the terminal 20 in DL (Downlink) and receives a control signal or data from the terminal 20 in UL (Uplink). Both the base station 10 and the terminal 20 are capable of transmitting and receiving signals by performing beamforming. Further, both the base station 10 and the terminal 20 are capable of applying MIMO (Multiple Input Multiple Output) communication to DL or UL. Further, both the base station 10 and the terminal 20 may perform communication via a secondary cell (SCell: Secondary Cell) and a primary cell (PCell: Primary Cell) by CA (Carrier Aggregation). Furthermore, the terminal 20 may perform communication via a primary cell of the base station 10 and a primary secondary cell group cell (PSCell: Primary SCG Cell) of another base station 10 by DC (Dual Connectivity).

The terminal 20 is a communication apparatus having a radio communication function, such as a smartphone, a mobile phone, a tablet, a wearable terminal, or a communication module for M2M (Machine-to-Machine). As illustrated in FIG. 1, the terminal 20 utilizes various communication services provided by the radio communication system by receiving a control signal or data from the base station 10 in DL and transmitting a control signal or data to the base station 10 in UL. Further, the terminal 20 receives various reference signals transmitted from the base station 10 and performs measurement of propagation path quality based on reception results of the reference signals. The terminal 20 may be referred to as a UE, and the base station 10 may be referred to as a gNB.

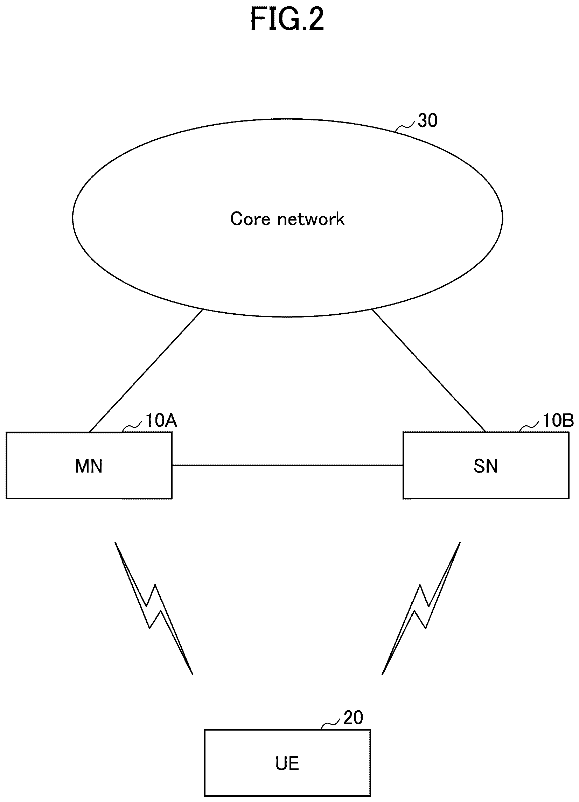

FIG. 2 is a diagram for describing an example (2) of the radio communication system according to an embodiment of the present invention. FIG. 2 illustrates an example configuration of a radio communication system when DC (Dual Connectivity) is performed. As illustrated in FIG. 2, a base station 10A serving as an MN (Master Node) and a base station 10B serving as an SN (Secondary Node) are provided. The base station 10A and the base station 10B are each connected to a core network. The terminal 20 can communicate with both the base station 10A and the base station 10B.

A cell group provided by the base station 10A that is the MN is referred to as an MCG (Master Cell Group), and a cell group provided by the base station 10B that is the SN is referred to as an SCG (Secondary Cell Group). Further, in DC, the MCG is composed of one PCell and one or more SCells, and the SCG is composed of one PSCell (Primary SCG Cell) and one or more SCells.

The processing operations in the present embodiment may be executed in the system configuration illustrated in FIG. 1, may be executed in the system configuration illustrated in FIG. 2, or may be executed in other system configurations.

Further, in NR, a carrier aggregation function that uses a wide bandwidth in order to secure data resources has been studied continuously from LTE. With the carrier aggregation function, wideband data resources can be secured by bundling multiple component carriers. For example, by bundling multiple bandwidths of 20 MHz, a bandwidth of 100 MHz can be obtained.

### (Regarding Virtual CC)

In the conventional carrier aggregation function, it is necessary to schedule data resources for each of the bundled component carriers, which causes a problem that the overhead of resource allocation is large.

Therefore, in order to solve the above-described conventional problem, it is conceivable that the terminal 20 and the base station 10 perform resource allocation using a scheduling unit with a granularity different from that of a component carrier.

A framework for performing scheduling or aggregation with a granularity different from that of a component carrier is defined as frequency fragmentation.

Further, in carrier aggregation, performing aggregation with a granularity different from that of a component carrier is defined as discontinuous carrier aggregation.

Further, in carrier aggregation (discontinuous carrier aggregation), performing scheduling with a granularity different from that of a component carrier is defined as discontinuous scheduling.

The above-described granularity different from that of a component carrier may be, for example, a virtual CC (virtual CC) unit, a BWP (Bandwidth Part) unit, a PRB (Physical Resource Block) unit, or a PRB set unit.

Here, a virtual CC is a carrier set obtained by bundling, among a plurality of component carriers, all or part of frequency resources included in each component carrier across the plurality of component carriers. The virtual CC may also be referred to as "a frequency band obtained by bundling resources of multiple component carriers".

For example, a virtual CC may be assumed to be composed of a plurality of BWPs.

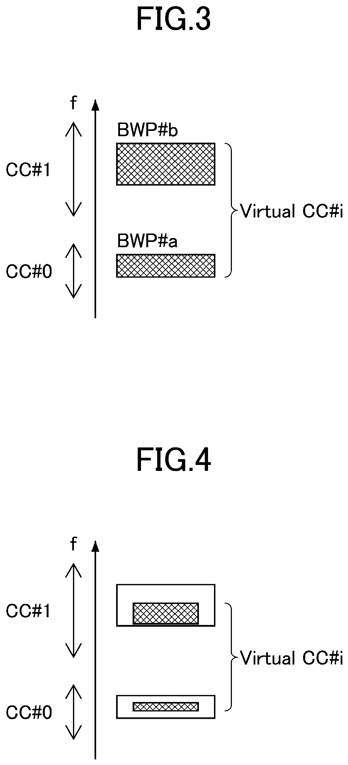

FIG. 3 is a first diagram illustrating an example of a configuration of a virtual CC according to an embodiment of the present invention. A virtual CC #i illustrated in FIG. 3 is a carrier set obtained by bundling BWP #a and BWP #b included in each of a plurality of component carriers (CC #0 and CC #1).

Further, a virtual CC may be assumed to be composed of a plurality of PRBs or one or more PRB sets.

FIG. 4 is a second diagram illustrating an example of a configuration of a virtual CC according to an embodiment of the present invention. A virtual CC #i illustrated in FIG. 4 is a carrier set obtained by bundling a plurality of PRBs included in each of a plurality of component carriers (CC #0 and CC #1). Note that the plurality of PRBs or PRB sets may be included in one or more BWPs.

Hereinafter, a CC before bundling is referred to as an actual CC, and a CC after bundling is referred to as a virtual CC or a nominal CC. Note that the names are not limited to these. Further, a CC that constitutes a virtual CC after bundling multiple actual CCs may, in some cases, be referred to as an "actual CC."

Further, in operations such as channel mapping, scheduling, HARQ, configuration, and the like, a virtual CC may be used in the same manner as a conventional single CC. Further, an actual CC may be reinterpreted as "contiguous frequency resources," and a virtual CC may be reinterpreted as "non-contiguous frequency resources." The "non-contiguous frequency resources" are an example of "a frequency band in which resources of a plurality of component carriers are bundled."

### (Problem)

Operations related to initial access can be performed using a virtual CC. However, in the conventional technology, there is a problem that operations related to initial access using a virtual CC are not clearly defined. Specifically, operations related to transmission and reception of synchronization signals, operations related to reception of system information (which may also be referred to as broadcast signals, broadcast information, or the like), and operations related to transmission and reception of channels or signals for a random access procedure (RACH procedure), and the like are not clearly defined.

Hereinafter, as embodiments that clarify operations related to initial access using a virtual CC, Embodiments 1 to 3 will be described. Embodiments 1 to 3 may be implemented in any combination.

### (Example Operations Common to Embodiments 1 to 3)

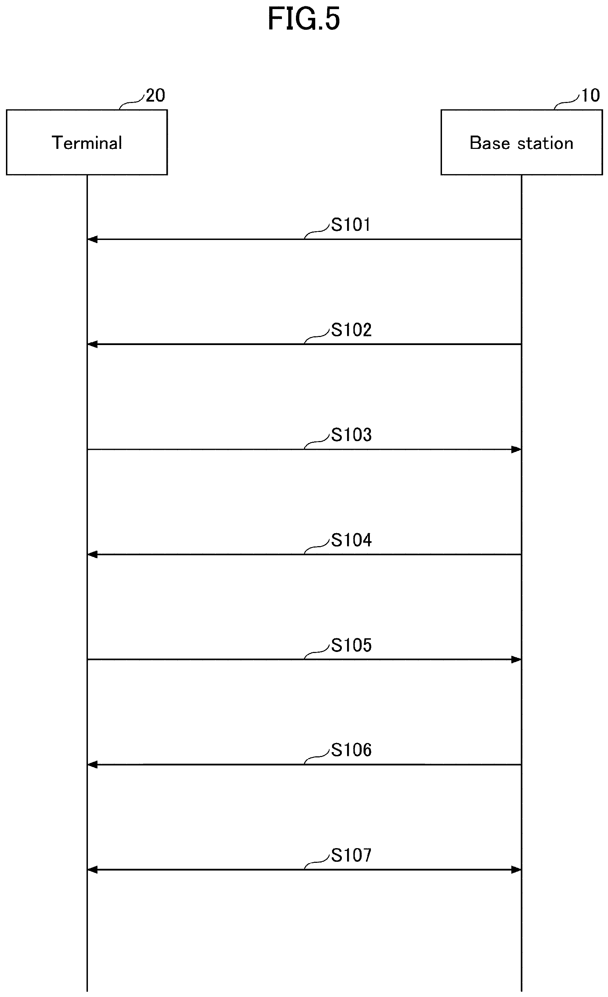

First, as an example of operations common to Embodiments 1 to 3, an example of operations related to initial access will be described with reference to FIG. 5.

In S101, the terminal 20 receives an SSB (including an MIB) transmitted from the base station 10. In S102, the terminal 20 receives SIB1 transmitted from the base station 10. Note that, in addition to SIB1, a SIB other than SIB1 may be received.

The terminal 20 establishes synchronization with the base station 10 by using the SSB, and acquires basic information of the cell by using the MIB, SIB1, and the like.

In S103, the terminal 20 transmits Msg1 (Message 1) to the base station 10. In S104, the terminal 20 receives Msg2 from the base station 10. In S105, the terminal 20 transmits Msg3 to the base station 10. In S106, the terminal 20 receives Msg4 from the base station 10.

In and after S107, transmission and reception of control signals specific to the terminal 20 and transmission and reception of data specific to the terminal 20, and the like are performed.

Note that the above example is an example of a 4-step RACH. A 2-step RACH may be performed. In that case, after S102, MsgA is transmitted from the terminal 20 to the base station 10, and MsgB is transmitted from the base station 10 to the terminal 20.

In the present embodiment, the period from reception of an SSB to completion of the random access procedure is referred to as initial access. Initial access may also be referred to as a RACH process. Further, "RACH" may mean the random access procedure. Initial access may also be referred to as random access (or a random access procedure). Further, the period from reception of a synchronization signal to before transmission of Msg1/MsgA may be referred to as initial access, and the subsequent processing may be referred to as random access.

### (Overview of Embodiments 1 to 3)

Next, as an overview of the technologies according to Embodiments 1 to 3, examples 1 to 4 of how a virtual CC and actual CCs are used differently in initial access (and in subsequent transmission and reception of channels/signals) when a virtual CC is used will be described. In the drawings, aCC denotes an actual CC, and vCC denotes a virtual CC.

A CC used before a virtual CC is configured for the terminal 20 (before the terminal 20 recognizes that a virtual CC is to be used) may be referred to as "a CC not constituting the virtual CC."

The actual CCs described below are assumed to be actual CCs used for a virtual CC, but may be actual CCs not constituting the virtual CC. In any of Examples 1 to 4, RRCSetupComplete is transmitted from the terminal 20 to the base station 10 at the end of the RACH procedure.

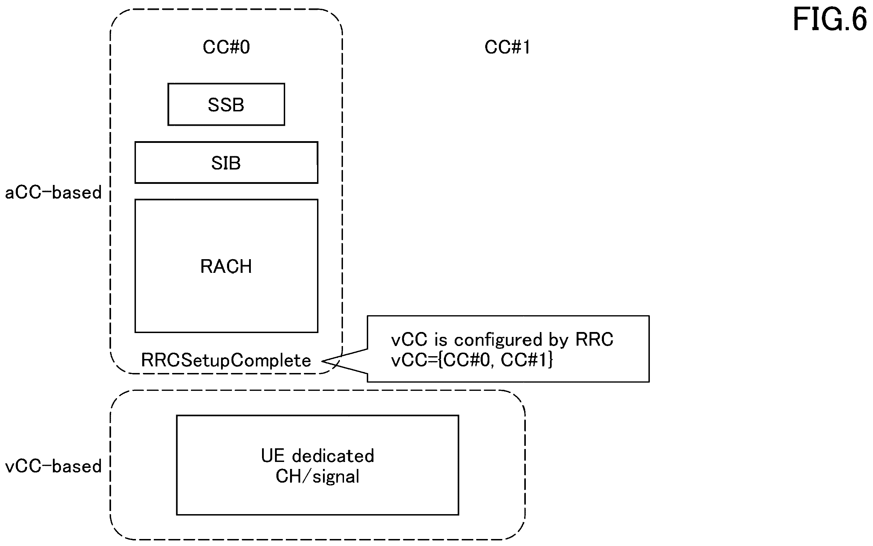

In Example 1 illustrated in FIG. 6, procedures from SSB to RACH are executed within an actual CC. In Example 1, a virtual CC is configured for the terminal 20 by RRC signaling (e.g., Msg2, Msg4, MsgB), and the terminal 20 transmits and receives terminal 20-dedicated channels/signals by using the virtual CC.

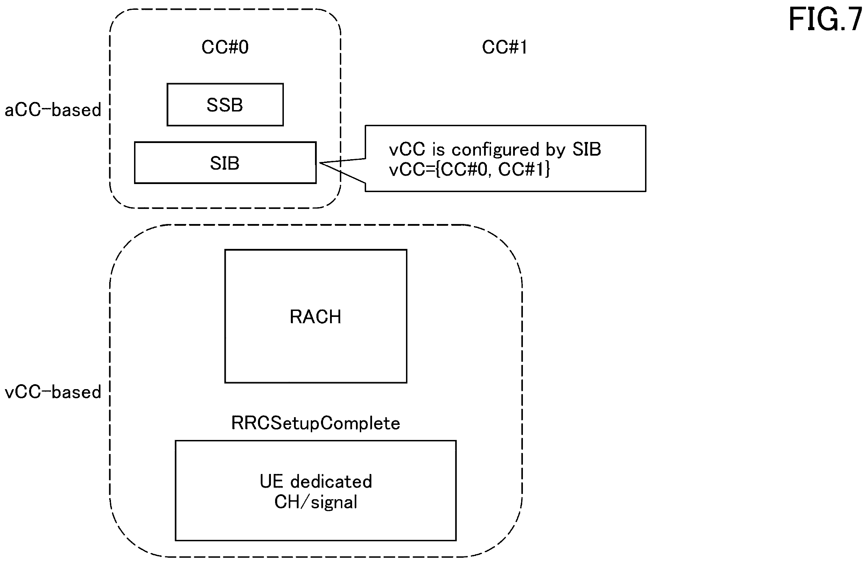

In Example 2 illustrated in FIG. 7, procedures related to SSB and SIB are executed within an actual CC, and procedures from RACH onward are executed using a virtual CC, that is, across a plurality of actual CCs.

In Example 2, a virtual CC is configured for the terminal 20 by a SIB (e.g., SIB1), and the terminal 20 executes procedures from RACH onward by using the virtual CC.

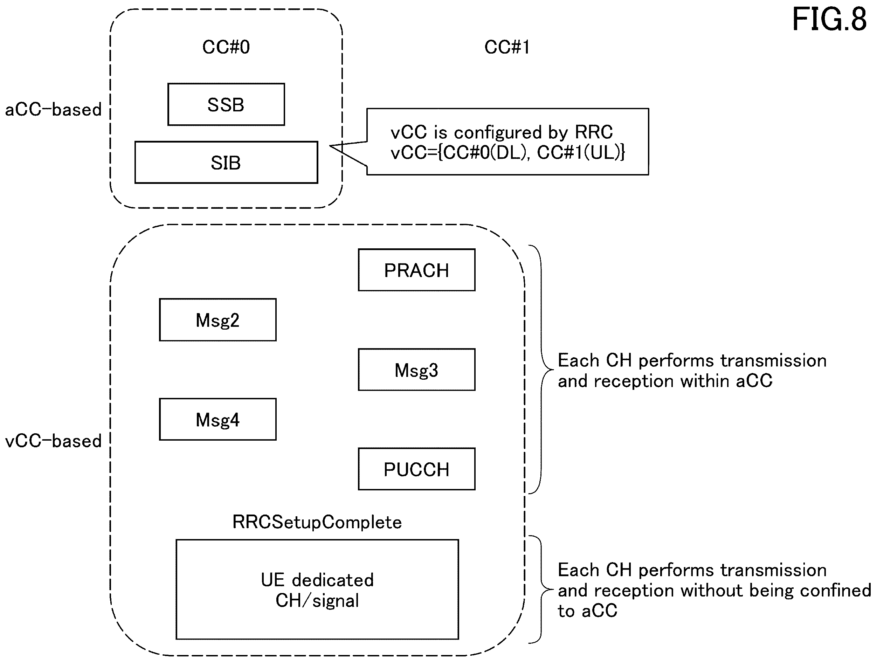

Also in Example 3 illustrated in FIG. 8, procedures related to SSB and SIB are executed within an actual CC, and procedures from RACH onward are executed using a virtual CC. Also in Example 3, a virtual CC is configured for the terminal 20 by a SIB (e.g., SIB1), and the terminal 20 executes procedures from RACH onward by using the virtual CC.

However, in Example 3, in the RACH procedure, reception of Msg2 and Msg4 is performed using CC #0, and transmission of PRACH (Msg1), Msg3, and PUCCH is performed using CC #1.

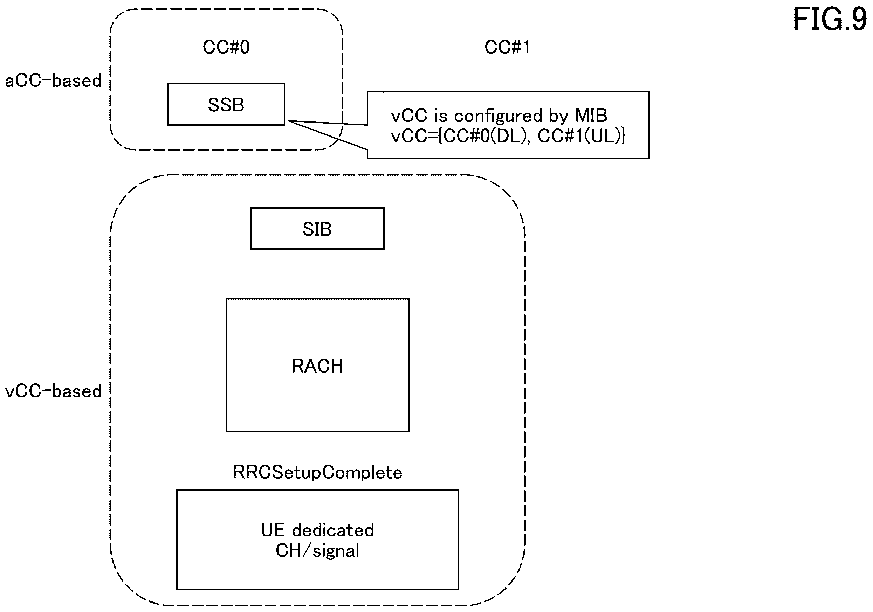

In Example 4 illustrated in FIG. 9, procedures related to SSB are executed within an actual CC, and procedures from SIB onward are executed using a virtual CC, that is, across a plurality of actual CCs.

In Example 4, a virtual CC is configured for the terminal 20 by the MIB included in the SSB, and the terminal 20 executes procedures from SIB onward by using the virtual CC.

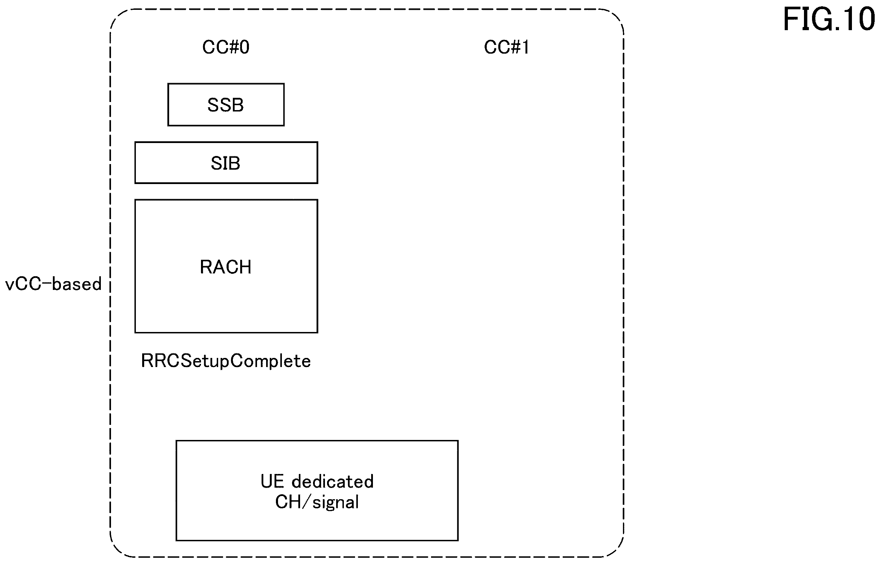

Note that "across a plurality of actual CCs" may mean, as illustrated in FIG. 10, a case where, when a virtual CC is used, one or more actual CCs included in the virtual CC are used. In other words, "across a plurality of actual CCs" may include a case where operations are performed on a single actual CC.

### (Initial Access / Random Access)

In Embodiments 1 to 3, "initial access/random access" may include at least one of a plurality of UE operations (1) to (8) described below.

(1) Reception/measurement of synchronization signals (e.g., PSS/SSS)
(2) Reception of system information (e.g., MIB/SIB)
(3) Transmission of UL synchronization signals (e.g., PRACH)
(4) Transmission/reception of channels/signals related to random access/contention resolution (Msg.1/2/3/4/A/B/HARQ-ACK for these)
(5) Operations from reception of synchronization signals to transmission of Msg5/UE capability reporting
(6) Operations from reception of synchronization signals to reception of RRCSetup
(7) Operations from reception of UE-dedicated parameters until they become effective (the UE-dedicated parameters may be specific UE-dedicated parameters)
(8) Operations from reception of synchronization signals to transmission of RRCSetupComplete
Further, in Embodiments 1 to 3, "initial access/random access" may include at least one of a plurality of base station operations (1) to (8) described below.

(1) Transmission of synchronization signals (e.g., PSS/SSS)
(2) Transmission of system information (e.g., MIB/SIB)
(3) Reception of UL synchronization signals (e.g., PRACH)
(4) Transmission/reception of channels/signals related to random access/contention resolution (Msg.1/2/3/4/A/B/HARQ-ACK for these)
(5) Operations from transmission of synchronization signals to reception of Msg5/UE capability reporting
(6) Operations from transmission of synchronization signals to transmission of RRCSetup
(7) Operations from transmission of UE-dedicated parameters until they become effective (the UE-dedicated parameters may be specific UE-dedicated parameters)
(8) Operations from transmission of synchronization signals to reception of RRCSetupComplete

### (Regarding RRCSetupComplete)

"RRCSetupComplete" may be replaced with any of the following. The following describes operations from a terminal perspective; by swapping reception and transmission, corresponding operations from a base station perspective are obtained.

- Transmission of Msg5/UE capability reporting
- Reception of RRCSetup
- Reception of UE-dedicated parameters (the UE-dedicated parameters may be specific UE-dedicated parameters)
- Transmission of RRCSetupComplete

### (Embodiment 1)

First, Embodiment 1 will be described. In Embodiment 1, operations in the terminal 20 for reception, measurement, and reporting of synchronization signals (PSS/SSS/PTRS, etc.) will be described. Embodiment 1 has Option 1 and Option 2. These will be described below. Note that reception of synchronization signals (PSS/SSS/PTRS, etc.) in the terminal 20 corresponds to transmission of synchronization signals (PSS/SSS/PTRS, etc.) in the base station 10. Further, Option 1 and Option 2 may be combined.

### <Embodiment 1: Option 1>

In Option 1, the terminal 20 performs reception, measurement, and reporting of synchronization signals on an actual-CC basis. The actual CC here may be an actual CC constituting a virtual CC or an actual CC not constituting a virtual CC.

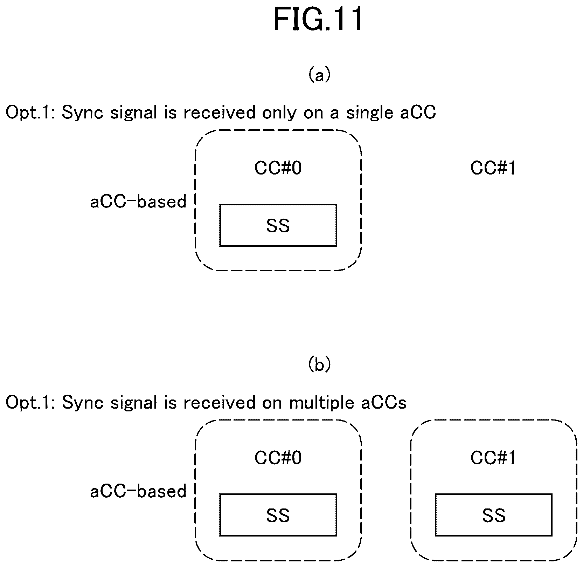

The terminal 20 may perform reception and measurement of synchronization signals on a single actual CC, or may perform reception and measurement of synchronization signals on each of a plurality of actual CCs. An example of Option 1 is illustrated in FIG. 11.

Regarding reporting, the terminal 20 may report measurement results for each actual CC individually to the base station 10 (Case 1), or may collectively report the measurement results on any one actual CC (Case 2).

For example, in a virtual CC composed of CC #0 and CC #1, in Case 1, the terminal 20 transmits, on CC #0, a measurement result of a synchronization signal received on CC #0, and transmits, on CC #1, a measurement result of a synchronization signal received on CC #1. In Case 2, the terminal 20 transmits, for example on CC #1, both a measurement result of a synchronization signal received on CC #0 and a measurement result of a synchronization signal received on CC #1.

Further, the terminal 20 may perform reception and measurement of synchronization signals on each actual CC included in the virtual CC, and may achieve time-domain synchronization for each actual CC.

### <Embodiment 1: Option 2>

In Option 2, the terminal 20 performs reception, measurement, and reporting of synchronization signals on a virtual-CC basis. Specifically, Options 2-1 and 2-2 are provided as described below.

### <Option 2-1>

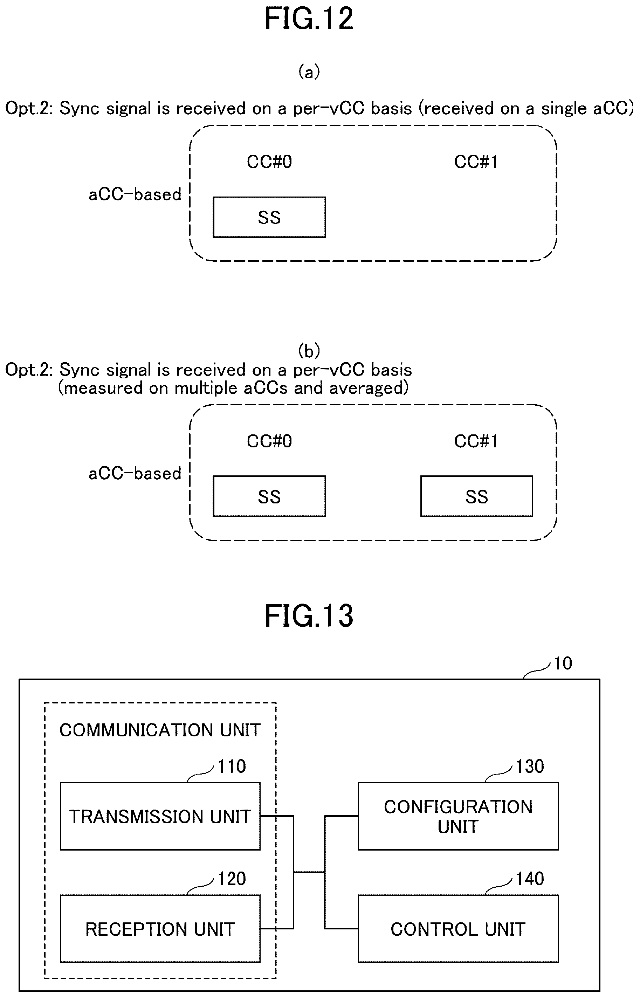

In Option 2-1, the terminal 20 performs reception and measurement of synchronization signals on a specific actual CC (referred to as a representative/reference actual CC) in the virtual CC, and reports the reception/measurement result in the actual CC as the reception/measurement result of synchronization signals in the virtual CC to the base station 10. One representative/reference actual CC may be used, or a plurality of representative/reference actual CCs may be used. An example of Option 2-1 is illustrated in FIG. 12(a).

As methods for determining the above representative/reference actual CC, for example, the following methods (1) to (5) may be used.

(1) The terminal 20/base station 10 determines a P(S)Cell as the representative/reference actual CC. This determination may be limited to a case where the virtual CC includes the P(S)Cell.
(2) The terminal 20 determines the representative/reference actual CC based on an instruction notified from the base station 10 via MIB/SIB/RRC/MAC CE/DCI. The instruction may directly indicate an ID of the representative/reference actual CC, or may indirectly indicate it, for example, by indicating a condition of a CC to be used as the representative/reference actual CC.

In this example, it is assumed that the NW (base station 10) determines the representative/reference actual CC based on the quality of PRACH/UL channels/UL reference signals received from the terminal 20.

(3) The terminal 20 determines the representative/reference actual CC based on DL measurement results.
(4) The terminal 20/base station 10 determines a CC having a minimum/maximum CC index as the representative/reference actual CC.
(5) The terminal 20 determines, as the representative/reference actual CC, a CC on which SS/MIB/SIB was received in initial access.

### <Option 2-2>

Option 2-2 is an option for measurement. In Option 2-2, the terminal 20 calculates, as a measurement result in a virtual CC, an average/filtered-average of measurement results on one or more actual CCs included in the virtual CC. The terminal 20 reports the measurement result, for example, using the representative/reference actual CC. An example of Option 2-2 is illustrated in FIG. 12(b).

Regarding reporting, reporting resources may be configured for a virtual CC, and the terminal 20 may report the measurement result to the base station 10 using the reporting resources.

### <Examples Common to Option 1 and Option 2 in Embodiment 1>

In Embodiment 1, actual CCs included in the virtual CC may be specified in a technical specification, or may be determined by the terminal 20 and reported to the base station 10. When determining the actual CCs included in the virtual CC, the terminal 20 may perform SS (synchronization signal) measurement in RRC CONNECTED and may determine the actual CCs based on the measurement results.

Further, actual CCs included in the virtual CC may be configured for the terminal 20 by the base station 10 via MIB/SIB/RRC/MAC CE/DCI.

Further, candidates of actual CCs constituting the virtual CC may be specified in a technical specification. In this case, the terminal 20 may determine a subset of the candidates as actual CCs to be actually used, or a subset of the candidates may be configured/instructed by the base station 10 to the terminal 20 as actual CCs to be actually used.

Further, information related to synchronization among a plurality of actual CCs included in the virtual CC may be notified from the terminal 20 to the base station 10 (or from the base station 10 to the terminal 20). The information related to synchronization may be, for example, information indicating whether synchronization is established among the plurality of actual CCs.

### <Example Operations Common to Option 1 and Option 2>

A channel raster/sync raster may be specified, for a virtual CC/an actual CC, in a technical specification, and the terminal 20 may perform a search for synchronization signals (PSS/SSS/PTRS, etc.) based on the technical specification. Note that a raster is a frequency-carrier arrangement on which the terminal 20 searches for the presence/absence of synchronization signals.

Further, association between an actual CC on which a synchronization signal search is performed and actual CCs included in the virtual CC may be specified in a technical specification. For example, a technical specification may define that when a synchronization signal search is performed on CC #0, a virtual CC is configured by CC #0 and CC #1.

Further, the base station 10 may notify the terminal 20 of a PCID (cell ID) using a synchronization signal sequence on each actual CC. In this case, an association may be defined between a relationship among the PCIDs across a plurality of actual CCs and the actual CCs included in a virtual CC.

For example, a plurality of actual CCs having the same PCID may be included in the same virtual CC. Alternatively, a plurality of actual CCs for which the magnitude of a difference between any two PCIDs is equal to or less than a predetermined value may be included in the same virtual CC. Further, in PCID notification using sequences, three or more synchronization signals (e.g., PSS, SSS, Tertiary SS) may be used.

### <Selection Between Option 1 and Option 2>

The terminal 20/base station 10 may determine which of Option 1 and Option 2 is to be applied depending on the purpose of "reception/measurement/reporting" of synchronization signals in the terminal 20. Examples (1) to (7) of the purposes are shown below.

(1) Time sync
(2) Phase tracking (frequency tracking)
(3) Cell selection/reselection, location registration
(4) Paging reception
(5) Initial access
(6) L1/beam measurement
(7) L3/RRM measurement

Further, the terminal 20/base station 10 may determine the option to be applied (Option 1 or Option 2) depending on the current RRC state (e.g., idle mode, connected mode). For example, the terminal 20/base station 10 may apply Option 1 (or Option 2) in idle mode and may apply Option 2 (or Option 1) in connected mode.

Further, the terminal 20/base station 10 may determine the option to be applied (Option 1 or Option 2) depending on UE capability information.

Further, the terminal 20/base station 10 may determine the option to be applied (Option 1 or Option 2) depending on a band configuration, an FR configuration, or an SCS configuration of a plurality of actual CCs constituting the virtual CC.

The band configuration is intra-band or inter-band. In the intra-band case, a plurality of actual CCs constituting the virtual CC exist in one band. In the inter-band case, a plurality of actual CCs constituting the virtual CC exist in a plurality of bands. For example, Option 1 (or Option 2) may be applied in the inter-band case, and Option 2 (or Option 1) may be applied in the intra-band case.

The FR configuration is intra-FR or inter-FR. In the intra-FR case, a plurality of actual CCs constituting the virtual CC exist in one FR. In the inter-FR case, a plurality of actual CCs constituting the virtual CC exist in a plurality of FRs. For example, Option 1 (or Option 2) may be applied in the inter-FR case, and Option 2 (or Option 1) may be applied in the intra-FR case.

The SCS configuration is same SCS or different SCS. In the same SCS case, the SCSs in the plurality of actual CCs constituting the virtual CC are identical. In the different SCS case, a plurality of different SCSs exist in the plurality of actual CCs constituting the virtual CC. For example, Option 1 (or Option 2) may be applied in the different SCS case, and Option 2 (or Option 1) may be applied in the same SCS case.

According to Embodiment 1, when resources of a plurality of component carriers are bundled and used, it is possible to appropriately perform operations related to initial access (in particular, operations related to synchronization signals).

### (Embodiment 2)

Next, Embodiment 2 will be described. In Embodiment 2, operations in the terminal 20 for reception of system information (MIB/SIB, etc.) will be described. Embodiment 2 has Option 1 and Option 2. These will be described below. Note that reception of system information (MIB/SIB, etc.) in the terminal 20 corresponds to transmission of system information (MIB/SIB, etc.) in the base station 10. Further, Option 1 and Option 2 may be combined.

### <Embodiment 2: Option 1>

In Option 1, the terminal 20 receives system information on an actual-CC basis. The terminal 20 may receive system information on a single actual CC, or may receive system information on each of a plurality of actual CCs. The actual CC here may be an actual CC constituting a virtual CC or an actual CC not constituting a virtual CC.

### <Embodiment 2: Option 2>

In Option 2, the terminal 20 receives system information on a virtual-CC basis. Specifically, Options 2-1 and 2-2 are provided as described below.

### <Option 2-1>

In Option 2-1, the terminal 20 receives system information on a specific actual CC in the virtual CC (referred to as a representative/reference actual CC), and treats the system information in the actual CC as the system information in the virtual CC. One representative/reference actual CC may be used, or a plurality of representative/reference actual CCs may be used.

As methods for determining the above representative/reference actual CC, for example, the following methods (1) to (4) may be used.

(1) The terminal 20/base station 10 determines a P(S)Cell as the representative/reference actual CC. This determination may be limited to a case where the virtual CC includes the P(S)Cell.
(2) The terminal 20 determines the representative/reference actual CC based on an instruction notified from the base station 10 via MIB/SIB/RRC/MAC CE/DCI. The instruction may directly indicate an id of the representative/reference actual CC, or may indirectly indicate it, for example, by indicating a condition of a CC to be used as the representative/reference actual CC.

In this example, it is assumed that the NW (base station 10) determines the representative/reference actual CC based on the quality of PRACH/UL channels/UL reference signals received from the terminal 20.

(3) The terminal 20 determines the representative/reference actual CC based on DL measurement results.
(4) The terminal 20/base station 10 determines a CC having a minimum/maximum CC index as the representative/reference actual CC.

### <Option 2-2>

In Option 2-2, resources of a channel for receiving system information are allocated across a plurality of CCs.

Mapping of resources for system information transmission from the base station 10 (system information reception in the terminal 20) to which actual CC among actual CCs included in the virtual CC may be specified in a technical specification, or may be configured/instructed from the NW to the terminal 20.

Further, the resources for system information transmission from the base station 10 (system information reception in the terminal 20) may be associated with configuration of a BWP for the virtual CC. For example, in a case where BWP #1 in a virtual CC composed of CC #0 and CC #1 has resources of CC #0 and resources of CC #1, resources for system information transmission from the base station 10 (system information reception in the terminal 20) may be mapped to CC #0 and CC #1.

Further, a minimum/maximum number of actual CCs to which resources of a channel related to system information transmission from the base station 10 (system information reception in the terminal 20) are mapped may be specified in a technical specification, or may be determined in accordance with UE capability.

### <Selection Between Option 1 and Option 2>

The terminal 20/base station 10 may determine which of Option 1 and Option 2 is to be applied depending on the purpose of system information reception in the terminal 20.

Further, the terminal 20/base station 10 may determine the option to be applied (Option 1 or Option 2) depending on the current RRC state (e.g., idle mode, connected mode). For example, the terminal 20/base station 10 may apply Option 1 (or Option 2) in idle mode, and may apply Option 2 (or Option 1) in connected mode.

Further, the terminal 20/base station 10 may determine the option to be applied (Option 1 or Option 2) depending on capability information of the terminal (UE capability).

Further, the terminal 20/base station 10 may determine the option to be applied (Option 1 or Option 2) depending on a band configuration, an FR configuration, and/or an SCS configuration of a plurality of actual CCs constituting the virtual CC.

The band configuration is intra-band or inter-band. In the intra-band case, a plurality of actual CCs constituting the virtual CC exist in one band. In the inter-band case, a plurality of actual CCs constituting the virtual CC exist in a plurality of bands. For example, Option 1 (or Option 2) may be applied in the inter-band case, and Option 2 (or Option 1) may be applied in the intra-band case.

The FR configuration is intra-FR or inter-FR. In the intra-FR case, a plurality of actual CCs constituting the virtual CC exist in one FR. In the inter-FR case, a plurality of actual CCs constituting the virtual CC exist in a plurality of FRs. For example, Option 1 (or Option 2) may be applied in the inter-FR case, and Option 2 (or Option 1) may be applied in the intra-FR case.

The SCS configuration is same SCS or different SCS. In the same SCS case, the SCSs in the plurality of actual CCs constituting the virtual CC are identical. In the different SCS case, a plurality of different SCSs exist in the plurality of actual CCs constituting the virtual CC. For example, Option 1 (or Option 2) may be applied in the different SCS case, and Option 2 (or Option 1) may be applied in the same SCS case.

### <Matters Common to Option 1 and Option 2>

Association between an actual CC on which MIB/SIB is received and actual CCs included in the virtual CC may be specified in a technical specification.

Further, the base station 10 may notify the terminal 20, by using synchronization signals (e.g., PSS/SSS), of an actual CC/a virtual CC on which MIB/SIB is received.

For example, the base station 10 notifies the terminal 20 of a PCID by using a synchronization-signal sequence, and specifies, by using the PCID, an actual CC on which MIB/SIB is received.

Further, for example, among a plurality of actual CCs for which the PCIDs notified by the synchronization signals are the same, the terminal 20 may receive MIB/SIB on an actual CC having a minimum/maximum PCID.

Further, for example, the terminal 20 may receive MIB on an actual CC on which the synchronization signal is received. Further, for example, the terminal 20 may receive SIB on an actual CC on which SS/MIB is received.

According to Embodiment 2, when resources of a plurality of component carriers are bundled and used, it is possible to appropriately perform operations related to initial access (in particular, operations related to system information).

### (Embodiment 3)

Next, Embodiment 3 will be described. In Embodiment 3, operations in the terminal 20/base station 10 for transmission and reception of signals/channels related to random access will be described. Embodiment 3 has Option 1 and Option 2. These will be described below. Option 1 and Option 2 may be combined.

### <Embodiment 3: Option 1>

In Option 1, the terminal 20/base station 10 transmits and receives signals/channels in random access on an actual-CC basis.

The terminal 20 may transmit and receive signals/channels in random access on a single actual CC, or may transmit and receive signals/channels in random access on each of a plurality of actual CCs. The actual CC here may be an actual CC constituting the virtual CC or an actual CC not constituting the virtual CC.

### <Embodiment 3: Option 2>

In Option 2, the terminal 20 transmits and receives signals/channels in random access on a virtual-CC basis. Specifically, Options 2-1 and 2-2 are provided as described below. Option 2-1 and Option 2-2 may be combined.

### <Option 2-1>

In Option 2-1, the terminal 20 transmits and receives signals/channels in random access within a specific actual CC in the virtual CC (referred to as a representative/reference actual CC). One representative/reference actual CC may be used, or a plurality of representative/reference actual CCs may be used.

As methods for determining the above representative/reference actual CC, for example, the following methods (1) to (5) may be used.

(1) The terminal 20/base station 10 determines a P(S)Cell as the representative/reference actual CC. This determination may be limited to a case where the virtual CC includes the P(S)Cell.
(2) The terminal 20 determines the representative/reference actual CC based on an instruction notified from the base station 10 via MIB/SIB/RRC/MAC CE/DCI. The instruction may directly indicate an id of the representative/reference actual CC, or may indirectly indicate it, for example, by indicating a condition of a CC to be used as the representative/reference actual CC.

In this example, it is assumed that the NW (base station 10) determines the representative/reference actual CC based on the quality of PRACH received from the terminal 20.

(3) The terminal 20 determines the representative/reference actual CC based on SSB measurement results.
(4) The terminal 20/base station 10 determines a CC having a minimum/maximum CC index as the representative/reference actual CC.
(5) The terminal 20/base station 10 determines, as the representative/reference actual CC, an actual CC on which transmission/reception of a specific channel/signal is performed. The actual CC on which transmission/reception of the specific channel/signal is performed is, for example, an actual CC on which synchronization signals are received, an actual CC for which PDCCH monitoring is configured, and the like.

### <Option 2-2>

In Option 2-2, the terminal 20/base station 10 transmits and receives signals/channels in random access on the virtual CC (i.e., across a plurality of CCs).

Mapping of resources for transmitting and receiving signals/channels in random access to which actual CC among actual CCs included in the virtual CC may be specified in a technical specification, or may be configured by the NW to the terminal 20. An actual CC to which resources for transmitting and receiving signals/channels in random access are mapped may be referred to as "a specific actual CC."

Further, resources for transmitting and receiving signals/channels in random access may be associated with configuration of a BWP for the virtual CC. For example, in a case where BWP #1 in a virtual CC composed of CC #0 and CC #1 has resources of CC #0 and resources of CC #1, resources for transmitting and receiving random access signals/channels may be mapped to CC #0 and CC #1.

Further, a minimum/maximum number of actual CCs to which resources for transmitting and receiving signals/channels in random access are mapped may be specified in a technical specification, or may be determined in accordance with UE capability.

Further, actual CCs may be separated depending on whether the signal/channel in random access is UL or DL. For example, such separation may be made such that CC #0 is used for UL and CC #1 is used for DL.

### <Selection Between Option 1 and Option 2>

The terminal 20/base station 10 may determine which of Option 1 and Option 2 is to be applied depending on the purpose of transmission/reception of signals/channels in random access. Examples (1) to (7) of the purposes are shown below.

(1) Initial connection from an RRC IDLE state
(2) Transition from an RRC INACTIVE state to an RRC CONNECTED state
(3) RRC reconnection
(4) Handover
(5) Random access due to UL becoming out-of-sync in an RRC CONNECTED state
(6) Request for OSI (on-demand SIB)
(7) Beam failure recovery

The terminal 20/base station 10 may determine the option to be applied (Option 1 or Option 2) depending on the channels/signals used in random access.

For example, the terminal 20/base station 10 applies Option 1 to PRACH and performs transmission/reception using a single actual CC. Further, the terminal 20/base station 10 may apply Option 1 to PRACH and perform transmission/reception using each of a plurality of actual CCs.

Further, the terminal 20/base station 10 may apply Option 1 to PRACH and Msg2, and may apply Option 2 from Msg3 onward.

Further, the terminal 20/base station 10 may determine the option to be applied (Option 1 or Option 2) depending on capability information of the terminal (UE capability).

Further, the terminal 20/base station 10 may determine the option to be applied (Option 1 or Option 2) depending on a band configuration, an FR configuration, or an SCS configuration of a plurality of actual CCs constituting the virtual CC.

The band configuration is intra-band or inter-band. In the intra-band case, a plurality of actual CCs constituting the virtual CC exist in one band. In the inter-band case, a plurality of actual CCs constituting the virtual CC exist in a plurality of bands. For example, Option 1 (or Option 2) may be applied in the inter-band case, and Option 2 (or Option 1) may be applied in the intra-band case.

The FR configuration is intra-FR or inter-FR. In the intra-FR case, a plurality of actual CCs constituting the virtual CC exist in one FR. In the inter-FR case, a plurality of actual CCs constituting the virtual CC exist in a plurality of FRs. For example, Option 1 (or Option 2) may be applied in the inter-FR case, and Option 2 (or Option 1) may be applied in the intra-FR case.

The SCS configuration is same SCS or different SCS. In the same SCS case, the SCSs in the plurality of actual CCs constituting the virtual CC are identical. In the different SCS case, a plurality of different SCSs exist in the plurality of actual CCs constituting the virtual CC. For example, Option 1 (or Option 2) may be applied in the different SCS case, and Option 2 (or Option 1) may be applied in the same SCS case.

### <Other Examples of Embodiment 3>

The terminal 20 may determine one or more actual CCs included in the virtual CC, and may report the determined one or more actual CCs to the NW. This report may be made by using any UL channel/signal in random access.

### <Embodiment 3: UL Synchronization/TA Command>

Regarding UL synchronization/TA command in Embodiment 3, the following Options 1 and 2 are provided.

### Option 1:

A TA command is notified from the base station 10 to the terminal 20 for each actual CC constituting the virtual CC.

### Option 2:

A TA command is notified from the base station 10 to the terminal 20 only for the representative/reference actual CC, and difference information (e.g., a difference between TA command values) between the representative/reference actual CC and another actual CC may also be notified.

According to Embodiment 3, when resources of a plurality of component carriers are bundled and used, it is possible to appropriately perform operations related to initial access (in particular, operations related to random access).

### (Other examples)

In the proposals of Embodiments 1 to 3 described above, which option(s) among the proposed options are to be used may be specified in a technical specification, or may be configured by higher-layer parameters. Further, which option(s) among the proposed options are to be used may be reported by the terminal 20 using capability information of the terminal 20 (e.g., "UE capability"). Further, which option(s) among the proposed options are to be used may be determined by a combination of configuration of higher-layer parameters and the reported capability information of the terminal. For example, from among options that the terminal 20 is capable of using as indicated by the reported capability information of the terminal 20, the base station 10 may determine one or more options, and information indicating the determined option(s) may be configured by higher-layer parameters. Note that the configuration is not limited to an example in which higher-layer parameters are used, and information may be notified by physical-layer control information (e.g., DCI).

The proposals of Embodiments 1 to 3 may be applied not only to carrier aggregation but also to dual connectivity. For example, a relationship among actual CCs notified by a SIB may be inter-RAT or intra-RAT. For example, when random access is performed using 5G NR, information related to 6G cell connection may be notified by a SIB so that the terminal can also connect to a 6G network.

The capability information (UE capability) of the terminal 20 may include, for example, information indicating whether the terminal 20 supports the proposals described above and/or whether the terminal 20 supports each of the options of the proposals.

In the present embodiment, "UE (User Equipment)" may be replaced with "UT (User Terminal)," "node," "user node," or the like.

In the present embodiment, "BWP" may mean a frequency resource group composed of a plurality of PRBs (Physical Resource Blocks), and may be replaced with "PRB" or "PRB set," "PRB group," "RBG (Resource Block Group)," or the like.

### (Apparatus Configuration)

Next, functional configuration examples of the base station 10 and the terminal 20 that execute the processing and operations described above will be described.

### <Base Station 10>

FIG. 13 is a diagram illustrating an example functional configuration of the base station 10. As illustrated in FIG. 13, the base station 10 includes a transmission unit 110, a reception unit 120, a configuration unit 130, and a control unit 140. The functional configuration illustrated in FIG. 13 is merely an example. As long as operations according to the embodiments of the present invention can be executed, the functional partitioning and names of the functional units may be arbitrary. Further, the transmission unit 110 and the reception unit 120 may collectively be referred to as a communication unit.

The transmission unit 110 includes a function of generating a signal to be transmitted to the terminal 20 and transmitting the signal wirelessly. The reception unit 120 includes a function of receiving various signals transmitted from the terminal 20 and obtaining, from the received signals, for example, information of higher layers. Further, the transmission unit 110 has a function of transmitting, to the terminal 20, NR-PSS, NR-SSS, NR-PBCH, DL/UL control signals, DCI on PDCCH, data on PDSCH, and the like.

The configuration unit 130 stores, in a storage device included in the configuration unit 130, configuration information that is preconfigured and various pieces of configuration information to be transmitted to the terminal 20, and reads the configuration information from the storage device as necessary.

The control unit 140 controls the base station 10. A functional unit related to signal transmission in the control unit 140 may be included in the transmission unit 110, and a functional unit related to signal reception in the control unit 140 may be included in the reception unit 120. Further, the transmission unit 110 may be referred to as a transmitter, and the reception unit 120 may be referred to as a receiver.

### <Terminal 20>

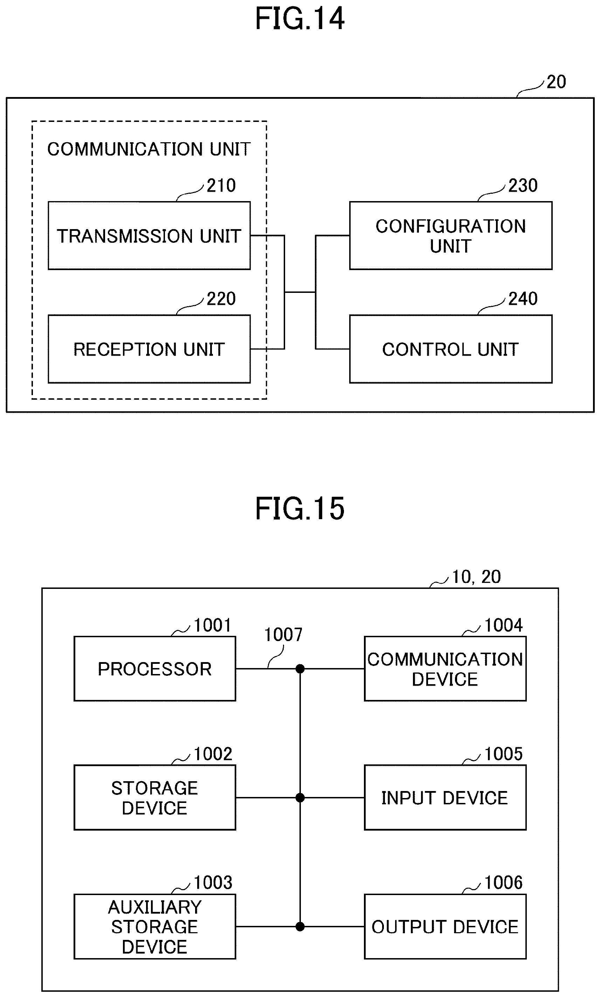

FIG. 14 is a diagram illustrating an example functional configuration of the terminal 20. As illustrated in FIG. 14, the terminal 20 includes a transmission unit 210, a reception unit 220, a configuration unit 230, and a control unit 240. The functional configuration illustrated in FIG. 14 is merely an example. As long as operations according to the embodiments of the present invention can be executed, the functional partitioning and names of the functional units may be arbitrary. Further, the transmission unit 210 and the reception unit 220 may collectively be referred to as a communication unit.

The transmission unit 210 generates a transmission signal from transmission data and transmits the transmission signal wirelessly. The reception unit 220 wirelessly receives various signals and obtains higher-layer signals from the received physical-layer signals. Further, the reception unit 220 has a function of receiving, from the base station 10, NR-PSS, NR-SSS, NR-PBCH, DL/UL/SL control signals, DCI on PDCCH, data on PDSCH, and the like. Further, for example, the transmission unit 210 may transmit, as D2D communication, PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20, and the reception unit 120 may receive PSCCH, PSSCH, PSDCH, PSBCH, and the like from another terminal 20.

The configuration unit 230 stores, in a storage device included in the configuration unit 230, various pieces of configuration information received by the reception unit 220 from the base station 10 or another terminal, and reads the configuration information from the storage device as necessary. The configuration unit 230 also stores preconfigured configuration information. The control unit 240 controls the terminal 20.

In this specification, at least the matters described in the following Supplementary Notes 1 and 2 are disclosed.

### <Supplementary Note 1>

### (Clause 1)

A terminal including:
a control unit configured to determine a specific component carrier from among a plurality of component carriers in a frequency band in which resources of the plurality of component carriers are bundled; and
a reception unit configured to receive a signal using the specific component carrier.

### (Clause 2)

The terminal according to Clause 1,
wherein the signal is a synchronization signal or system information, and wherein the reception unit receives the synchronization signal or the system information using the specific component carrier as the synchronization signal or the system information in the frequency band.

### (Clause 3)

The terminal according to Clause 1 or 2,
wherein the signal is a synchronization signal, and wherein the reception unit identifies a component carrier constituting the frequency band based on a cell ID notified by a sequence of the synchronization signal.

### (Clause 4)

The terminal according to any one of Clauses 1 to 3,
wherein the signal is system information, and wherein the reception unit receives a synchronization signal and determines, based on the synchronization signal, the specific component carrier by which the system information is to be received.

### (Clause 5)

A base station including:
a control unit configured to determine a specific component carrier from among a plurality of component carriers in a frequency band in which resources of the plurality of component carriers are bundled; and
a transmission unit configured to transmit a signal using the specific component carrier.

### (Clause 6)

A communication method executed by a terminal, the communication method including:
determining a specific component carrier from among a plurality of component carriers in a frequency band in which resources of the plurality of component carriers are bundled; and
receiving a signal using the specific component carrier.

With any of the configurations described in the above Clauses, there is provided a technique that enables operations related to initial access to be appropriately performed when resources of a plurality of component carriers are bundled and used. According to Clause 2, operations related to synchronization signals or system information can be appropriately performed. According to Clause 3, identification of component carriers constituting the frequency band can be efficiently performed. According to Clause 4, determination of a specific component carrier for receiving system information can be efficiently performed.

### <Supplementary Note 2>

### (Clause 1)

A terminal including:
a control unit configured to determine a specific component carrier from among a plurality of component carriers in a frequency band in which resources of the plurality of component carriers are bundled; and
a communication unit configured to perform communication in a random access procedure by using the specific component carrier.

### (Clause 2)

The terminal according to Clause 1,
wherein the control unit:
determines a component carrier of a P(S)Cell as the specific component carrier;
determines the specific component carrier based on notification from a base station;
determines the specific component carrier based on measurement results of synchronization signals;
determines the specific component carrier based on an index; or
determines, as the specific component carrier, a component carrier on which transmission or reception of a specific signal or channel is performed.

### (Clause 3)

The terminal according to Clause 1 or 2,
wherein the communication unit performs transmission or reception of a specific channel or a specific signal in the random access procedure by using one or more component carriers not constituting the frequency band.

### (Clause 4)

The terminal according to any one of Clauses 1 to 3,
wherein the communication unit:
receives a TA command for each component carrier constituting the frequency band, or
receives a TA command for the specific component carrier and difference information related to another component carrier constituting the frequency band.

### (Clause 5)

A base station including:
a control unit configured to determine a specific component carrier from among a plurality of component carriers in a frequency band in which resources of the plurality of component carriers are bundled; and
a communication unit configured to perform communication in a random access procedure by using the specific component carrier.

### (Clause 6)

A communication method executed by a terminal, the communication method including:
determining a specific component carrier from among a plurality of component carriers in a frequency band in which resources of the plurality of component carriers are bundled; and
performing communication in a random access procedure by using the specific component carrier.

With any of the configurations described in the above Clauses, there is provided a technique that enables operations related to initial access to be appropriately performed when resources of a plurality of component carriers are bundled and used. According to Clause 2, the specific component carrier can be appropriately determined. According to Clause 3, transmission and reception of a specific channel/signal can be performed on a component-carrier basis. According to Clause 4, a TA command can be appropriately processed when a frequency band in which resources of a plurality of component carriers are bundled is used.

### (Hardware Configuration)

The block diagrams (FIGs. 13 and 14) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20 and the like in one embodiment of this disclosure may function as a computer for performing the processing of a radio communication method of this disclosure. FIG. 15 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10, and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in Fig.13 may be attained by a control program that is stored in the storage device 1002 and is operated by the processor 1001. Also, for example, the control unit 240 of the terminal 20 shown in Fig.14 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

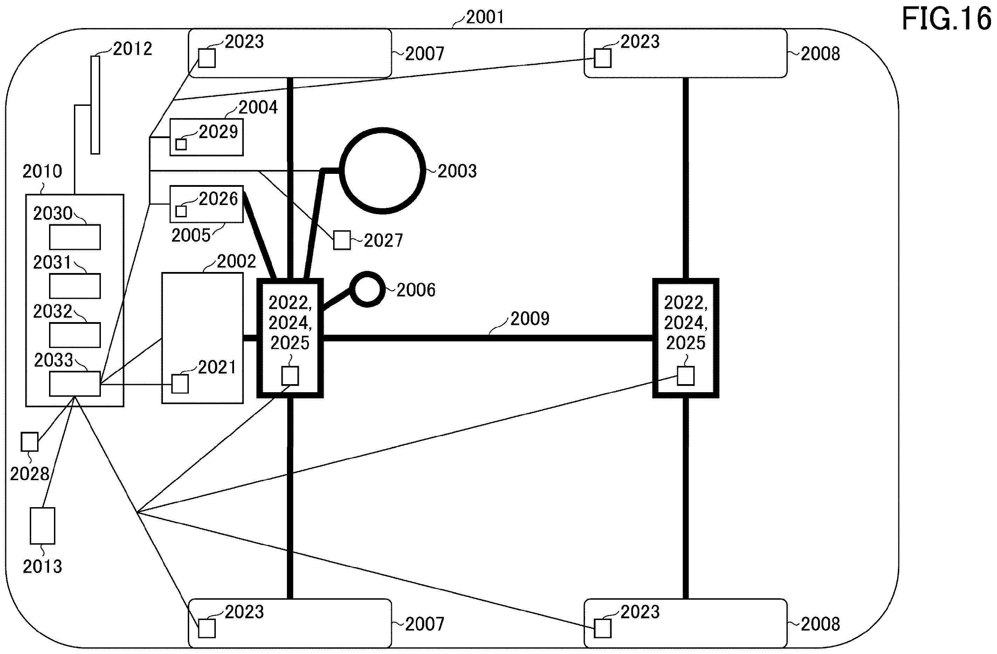

FIG. 16 shows a configuration example of a vehicle 2001 according to the present embodiment. As shown in FIG. 16, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels and the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like. When the terminal 20, or the base station 10 is included in the communication module 2013, the communication module 2013 can execute the operations described in Embodiments 1 and 2.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multi-copters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a control unit configured to determine a specific component carrier from among a plurality of component carriers in a frequency band in which resources of the plurality of component carriers are bundled; and
a reception unit configured to receive a signal using the specific component carrier.

2. The terminal as claimed in claim 1,
wherein the signal is a synchronization signal or system information, and wherein the reception unit receives the synchronization signal or the system information using the specific component carrier as the synchronization signal or the system information in the frequency band.

3. The terminal as claimed in claim 1,
wherein the signal is a synchronization signal, and wherein the reception unit identifies a component carrier constituting the frequency band based on a cell ID notified by a sequence of the synchronization signal.

4. The terminal as claimed in claim 1,
wherein the signal is system information, and wherein the reception unit receives a synchronization signal and determines, based on the synchronization signal, the specific component carrier by which the system information is to be received.

5. A base station comprising:
a control unit configured to determine a specific component carrier from among a plurality of component carriers in a frequency band in which resources of the plurality of component carriers are bundled; and
a transmission unit configured to transmit a signal using the specific component carrier.

6. A communication method executed by a terminal, the communication method comprising:
determining a specific component carrier from among a plurality of component carriers in a frequency band in which resources of the plurality of component carriers are bundled; and
receiving a signal using the specific component carrier.
